(19) Europäisches Patentamt
European Patent Office
Office européen des brevets

(11) **EP 4 462 516 A1**

(12) **EUROPEAN PATENT APPLICATION**
published in accordance with Art. 153(4) EPC

(43) Date of publication:
**13.11.2024 Bulletin 2024/46**

(21) Application number: **23863486.9**

(22) Date of filing: **06.09.2023**

(51) International Patent Classification (IPC):
*H01M 4/62* $^{(2006.01)}$    *H01M 4/38* $^{(2006.01)}$
*H01M 4/48* $^{(2010.01)}$    *H01M 4/1395* $^{(2010.01)}$
*H01M 4/134* $^{(2010.01)}$   *H01M 4/02* $^{(2006.01)}$

(52) Cooperative Patent Classification (CPC):
**H01M 4/02; H01M 4/134; H01M 4/1395;
H01M 4/38; H01M 4/48; H01M 4/62**

(86) International application number:
**PCT/KR2023/013299**

(87) International publication number:
**WO 2024/054019 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.09.2022  KR 20220113646
05.09.2023  KR 20230117606**

(71) Applicant: **LG Energy Solution, Ltd.
Seoul 07335 (KR)**

(72) Inventors:
• **KIM, Young Jae
  Daejeon 34122 (KR)**
• **LEE, Jaewook
  Daejeon 34122 (KR)**

(74) Representative: **Hoffmann Eitle
Patent- und Rechtsanwälte PartmbB
Arabellastraße 30
81925 München (DE)**

(54) **NEGATIVE ELECTRODE COMPOSITION, NEGATIVE ELECTRODE FOR LITHIUM SECONDARY BATTERY, COMPRISING SAME, AND LITHIUM SECONDARY BATTERY COMPRISING NEGATIVE ELECTRODE**

(57)    The present application relates to a negative electrode composition, a negative electrode for a lithium secondary battery, and a lithium secondary battery including a negative electrode.

[Figure 1]

**Description**

[Technical Field]

The present application claims priority to and the benefit of Korean Patent Application No. 10-2022-0113646 filed in the Korean Intellectual Property Office on September 7, 2022, the entire contents of which are incorporated herein by reference.

The present application relates to a negative electrode composition, a negative electrode for a lithium secondary battery including the same, and a lithium secondary battery including a negative electrode.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high-density energy batteries in recent years, researches are being actively conducted on a method for increasing a capacity by using a silicon-based compound such as Si/C or SiOx having a capacity greater than, by a factor of 10 or more, graphite-based materials, as a negative electrode active material. When compared with graphite that is typically used, however, the silicon-based compound that is a high-capacity material has a large capacity but undergoes rapid volume expansion during a charging process, thereby disconnecting a conductive path to degrade battery characteristics.

Accordingly, in order to address a problem occurring when the silicon-based compound is used as the negative electrode active material, methods of suppressing the volume expansion itself such as a method of controlling a driving potential, a method of additionally further coating a thin film on an active material layer and a method of controlling a particle diameter of a silicon-based compound, or various measures for preventing a conductive path from being disconnected have been discussed. However, the above methods may rather deteriorate the performance of a battery, and thus, the application thereof is limited, so that there is still a limitation in commercializing the manufacture of a negative electrode battery having a high content of a silicon-based compound.

Therefore, it is necessary to study a negative electrode composition capable of preventing the volume expansion, damage to a conductive path, and surface breakage due to the charging and discharging, in the process of manufacturing a silicon-based negative electrode for maximizing capacity characteristics.

Prior Art Document

(Patent Literature 1) Japanese Patent Application Publication No. 2009-080971

[Detailed Description of the Invention]

[Technical Problem]

In the silicon-based negative electrode, a negative electrode binder is used to control volume expansion due to the charging and discharging, and various types of negative electrode conductive materials are also used to maintain a conductive path. However, the problems of volume expansion and life characteristics due to the charging and discharging are still not solved.

As a result of research to improve the above problems, it has been found that the above problems can be controlled when a conductive material having a certain composition is included as the conductive material and a content of the binder is controlled.

Accordingly, the present application relates to a negative electrode composition capable of solving the above problems, and a negative electrode for a lithium secondary battery including the same, and a lithium secondary battery including the negative electrode.

[Technical Solution]

An exemplary embodiment of the present specification provides a negative electrode composition including: a silicon-based active material; a linear conductive material; and a negative electrode binder, wherein the silicon-based active material includes one or more selected from the group consisting of SiOx (x=0) and/or SiOx (0<x<2), and includes 90 parts by weight or more of the SiOx (x=0) on the basis of 100 parts by weight of the silicon-based active material, wherein the linear conductive material includes an SWCNT and an MWCNT, wherein the silicon-based active material is included in an amount of 80 parts by weight or more and 95 parts by weight or less on the basis of 100 parts by weight of the negative electrode composition, and wherein the negative electrode binder is included in an amount of 3 parts by weight or more and 10 parts by weight or less on the basis of 100 parts by weight of the silicon-based active material.

Another exemplary embodiment of the present invention provides a negative electrode for a lithium secondary battery including a negative electrode current collector layer; and a negative electrode active material layer including the negative electrode composition according to the present application formed on one surface or both surfaces of the negative electrode current collector layer.

Finally, there is provided a lithium secondary battery including a positive electrode; the negative electrode for a lithium secondary battery according to the present application; a separator provided between the positive electrode and the negative electrode; and an electrolyte.

[Advantageous Effects]

The negative electrode composition according to the present application includes the linear conductive material to solve the above problems while including the silicon-based active material in order to increase the capacity of the negative electrode. Specifically, the MWCNT, which can satisfy a short-distance conductive network, and the SWCNT, which can satisfy a long-distance conductive network and increase binder rigidity, are used. By using the conductive material that satisfies the above composition, a ratio of the active material in the negative electrode composition can be increased and a solid content of the negative electrode slurry can be increased, leading to an improvement in performance of the cell itself.

In addition, in order to secure the conductive network as described above, and at the same time, to solve the problems caused due to the volume expansion of the silicon-based active material, a certain content of binder is included based on the silicon-based active material.

That is, the negative electrode composition according to the present invention has the main features of specifying the ratio of the silicon-based active material included in the negative electrode to which the silicon-based active material is applied in order to maximize the capacity, and optimizing the parts by weight of the negative electrode binder that can effectively control the volume expansion and relaxation, according to the ratio, and the composition of the linear conductive material that can secure the conductive network and control the rigidity.

The main purpose of the present invention is that when a negative electrode composition having the above composition and content is applied to a negative electrode, the advantages of using a silicon-based active material can be maintained, and at the same time, problems such as deterioration of life characteristics and disconnection of the conductive network are solved.

[Brief Description of Drawings]

FIG. 1 is a view showing a stack structure of a negative electrode for a lithium secondary battery according to an exemplary embodiment of the present application.
FIG. 2 is a view showing a stack structure of a lithium secondary battery according to an exemplary embodiment of the present application.

<Explanation of Reference Numerals and Symbols>

10: negative electrode current collector layer

20: Negative electrode active material layer
30: separator
40: positive electrode active material layer
50: positive electrode current collector layer
100: negative electrode for lithium secondary battery
200: positive electrode for lithium secondary battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount at a liquid nitrogen temperature (77K) by using BELSORP-mino II available from BEL Japan, Inc. That is, in the present application, the BET specific surface area may refer to the specific surface area measured by the above measurement method.

In the present specification, "Dn" means a particle size distribution, and means a particle size at the n% point in the cumulative distribution of the number of particles according to the particle size. That is, D50 is the particle size (center particle size) at the 50% point in the cumulative distribution of the number of particles according to the particle size, D90 is the particle size at the 90% point in the cumulative distribution of the number of particles according to the particle size, and D10 is the particle size at the 10% point in the cumulative distribution of the number of particles according to the particle size. Meanwhile, the center particle size may be measured using a laser diffraction method. Specifically, after powder to be measured is dispersed in a dispersion medium, the resultant dispersion is introduced into a commercially available laser diffraction particle size measurement apparatus (for example, Microtrac S3500) in which a difference in a diffraction pattern according to the particle size is measured, when a laser beam passes through particles, and then a particle size distribution is calculated.

In an exemplary embodiment of the present application, the particle size or particle diameter may mean an average diameter or representative diameter of each grain constituting the particle.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a negative electrode composition including: a silicon-based active material; a linear conductive material; and a negative electrode binder, wherein the silicon-based active material includes one or more selected from the group consisting of SiOx (x=0) and/or SiOx (0<x<2), and includes 90 parts by weight or more of the SiOx (x=0) on the basis of 100 parts by weight of the silicon-based active material, wherein the linear conductive material includes an SWCNT and an MWCNT, wherein the silicon-based active material is included in an amount of 80 parts by weight or more and 95 parts by weight or less on the basis of 100 parts by weight of the negative electrode composition, and wherein the negative electrode binder is included in an amount of 3 parts by weight or more and 10 parts by weight or less on the basis of 100 parts by weight of the silicon-based active material.

The negative electrode composition according to the present application has the main features of specifying the ratio of the silicon-based active material included in the negative electrode to which the silicon-based active material is applied in order to maximize the capacity, and optimizing the parts by weight of the negative electrode binder that can effectively control the volume expansion and relaxation, according to the ratio, and the composition of the linear conductive material that can secure the conductive network and control the rigidity.

Hereinafter, the negative electrode composition according to the present application will be described in detail.

In an exemplary embodiment of the present application, the silicon-based active material may include one or more selected from the group consisting of SiOx (x=0) and SiOx (0<x<2), and may include the SiOx (x=0) in an amount of 90 parts by weight or more on the basis of 100 parts by weight of the silicon-based active material.

In another exemplary embodiment, SiOx (x=0) may be included in amount of 90 parts by weight or more, preferably 92 parts by weight or more, and more preferably 93 parts by weight or more, and 100 parts by weight or less, preferably 99 parts by weight or less, and more preferably 95 parts by weight or less on the basis of 100 parts by weight of the silicon-based active material.

In an exemplary embodiment of the present application, the silicon-based active material may be SiOx (x=0).

In an exemplary embodiment of the present application, for the silicon-based active material, pure silicon (Si) may be particularly used as the silicon-based active material. The use of pure silicon (Si) as the silicon-based active material may mean that, on the basis of 100 parts by weight of the total silicon-based active material as described above, pure Si (SiOx (x=0)) not bonded to other particles or elements are included within the above range.

In an exemplary embodiment of the present application, the crystal grain size of the silicon-based active material may be 200 nm or less.

In another exemplary embodiment, the crystal grain size of the silicon-based active material may be 200 nm or less, preferably 130 nm or less, more preferably 110 nm or less, still more preferably 100 nm or less, specifically 95 nm or less, and more specifically 91 nm or less. The crystal grain size of the silicon-based active material may have a range of 10 nm or greater, preferably 15 nm or greater.

The silicon-based active material has the crystal grain size described above, and the crystal grain size of the silicon-based active material may be controlled by changing a process condition in a manufacturing process.

In this case, when the above range is satisfied, the crystal grain boundaries are widely distributed, and thus, the lithium ions can be uniformly intercalated during intercalating of lithium ions, thereby reducing the stress applied during intercalating of lithium ions into the silicon particles, and accordingly, mitigating breakage of the particles. As a result, characteristics capable of improving the life stability of the negative electrode are obtained. If the crystal grain size exceeds the above range, the crystal grain boundaries within the particles are narrowly distributed, and in this case, lithium ions are non-uniformly intercalated into the particles, leading to large stress during the intercalating of ions, and accordingly, breakage of particles.

In an exemplary embodiment of the present application, the silicon-based active material includes a crystal structure having a crystal grain distribution of 1 nm or greater and 200 nm or less, and an area ratio of the crystal structure based on a total area of the silicon-based active material may be 5% or less.

In another exemplary embodiment, the area ratio of the crystal structure based on the total area of the silicon-based active material may be 5% or less, or 3% or less, and 0.1% or greater.

That is, the silicon-based active material according to the present application has a crystal grain size of 200 nm or less, is formed so that the size of one crystal structure is small, and may satisfy the above area ratio. Accordingly, the distribution of the crystal grain boundaries may be widened, and accordingly, the above-described effects may be exhibited.

In an exemplary embodiment of the present application, the number of crystal structures included in the silicon-based active material may be 20 or more.

In another exemplary embodiment, the number of crystal structures included in the silicon-based active material may satisfy a range of 20 or more, 30 or more, or 35 or more, and 60 or less or 50 or less.

That is, as described above, when the crystal grain size of the silicon-based active material satisfies the above range and the number of crystal structures satisfies the above range, the silicon-based active material itself has strength within an appropriate range. Therefore, when such a silicon-based active material is included in an electrode, flexibility can be imparted and volume expansion can be effectively suppressed.

In the present application, the crystal grain refers to a crystal particle in a metal or material, which is a collection of microscopically irregular shapes, and the crystal grain size may mean a diameter of the observed crystal grain particle. That is, in the present application, the crystal grain size means a size of a domain sharing the same crystal direction in a particle, and has a different concept from a particle size or a size of a particle diameter expressing a size of a material.

In an exemplary embodiment of the present application, the crystal grain size can be calculated as a value of full width at half maximum (FWHM) through XRD analysis. The remaining values except L are measured through XRD analysis of the silicon-based active material, and the crystal grain size can be measured through the Debey-Scherrer equation showing that the FWHM and the crystal grain size are in inverse ratio. The Debey-Scherrer equation is as shown in Equation 1-1 below.

$$[Equation\ 1\text{-}1]$$

$$FWHM = K\lambda/LCos\theta$$

in Equation 1-1,

L is the crystal grain size, K is a constant, $\theta$ is a Bragg angle, and $\lambda$ means a wavelength of X-ray.

In addition, the shapes of the crystal grains are diverse and can be measured in three dimensions. In general, the size of the crystal grain can be measured by a generally used circle method or diameter measurement method, but the present invention is not limited thereto.

In the diameter measurement method, the size of the crystal grain can be measured by drawing 5 to 10 parallel lines each having a length of L mm on a micrograph of a target particle, counting the number of crystal grains z on each line, and averaging them. In this case, only crystal grains that are wholly included on the line are counted, and crystal grains that are partially put (laid across) on the line are excluded. If the number of lines is P and the magnification is V, the average particle diameter can be calculated by Equation 1-2 below.

[Equation 1-2]

$$Dm = (L*P*10^3)/(zV) \quad (um)$$

In addition, the circle method is a method in which a circle with a predetermined diameter is drawn on a micrograph of a target particle, and then an average area of crystal grains is calculated by the number of crystal grains in the circle and the number of crystal grains laid across the boundary line, and the average area can be calculated by Equation 1-3 below.

[Equation 1-3]

$$Fm = (Fk * 10^6) / ((0.67n + z) V^2) \quad (um^2)$$

In Equation 1-3, Fm is an average particle area, Fk is a measurement area on the photograph, z is the number of particles in a circle, n is the number of particles laid across the circle, and V is a magnification of a microscope.

In an exemplary embodiment of the present application, the silicon-based active material may have a surface area of 0.25 $m^2$/g or greater.

In another exemplary embodiment, the silicon-based active material may have a surface area of 0.25 $m^2$/g or greater, preferably 0.28 $m^2$/g or greater, and more preferably 0.30 $m^2$/g or greater, specifically 0.31 $m^2$/g or greater, and more specifically 0.32 $m^2$/g or greater. The silicon-based active material may satisfy a range of a surface area of 3 $m^2$/g or less, preferably 2.5 $m^2$/g or less, and more preferably 2.2 $m^2$/g or less. The surface area may be measured according to DIN 66131 (using nitrogen).

The silicon-based active material has the surface area described above, and the surface area of the silicon-based active material may be controlled by changing a process condition of a manufacturing process and a growth condition of the silicon-based active material. That is, when the silicon-based active material is manufactured using the manufacturing method according to the present application, the rough surface results in a larger surface area, as compared with particles with the same particle size. In this case, the above range is satisfied, and thus, the bonding force with the binder increases, leading to reduction in cracks of an electrode due to repeating charge and discharge cycles.

In addition, the lithium ions can be uniformly intercalated during intercalation of lithium ions, resulting in reduction in stress applied during intercalation of lithium ions into the silicon particles, and accordingly, reduction in breakage of the particles.

As a result, characteristics capable of improving the life stability of the negative electrode are obtained. If the surface area is less than the above range, the surface is formed smooth even with the same particle size, resulting in a decrease in the bonding force with the binder, and cracks of the electrode. In this case, lithium ions are non-uniformly intercalated into the particles, resulting in an increase in the stress due to the ion intercalation, and breakage of particles.

In an exemplary embodiment of the present application, the silicon-based active material satisfies a range in Equation 2-1 below.

[Equation 2-1]

$$X1/Y1 \leq 0.960$$

in Equation 2-1,

X1 refers to an actual area of the silicon-based active material, and Y1 refers to an area of a spherical particle with the same circumference as the silicon-based active material.

The measurement of Equation 2-1 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, Equation 2-1 is a value expressing an average of 10,000 particles. Equation 2-1 according to the present application can be measured from the above image, and Equation 2-1 can be expressed as sphericity (circularity) of the silicon-based active material. The sphericity may also be expressed by Equation [$4\pi$*actual area of silicon-based active material/(circumference)$^2$] .

In an exemplary embodiment of the present application, the sphericity of the silicon-based active material may be 0.960 or less, for example, 0.957 or less. The sphericity of the silicon-based active material may be 0.8 or higher, for example, 0.9 or higher, specifically 0.93 or higher, more specifically 0.94 or higher, for example, 0.941 or higher.

In an exemplary embodiment of the present application, the silicon-based active material satisfies a range in Equation 2-2 below.

$$[\text{Equation 2-2}]$$

$$X2/Y2 \leq 0.995$$

in Equation 2-2,

Y2 is the actual circumference of the silicon-based active material, and X2 is the circumference of the circumscribed figure of the silicon-based active material.

The measurement of Equation 2-2 above may be performed using a particle shape analyzer. Specifically, the silicon-based active material according to the present application may be scattered on a glass plate through air injection, and then a shape of 10,000 silicon-based active material particles in a photograph obtained by capturing a shadow image of the scattered silicon-based active material particles may be measured. In this case, Equation 2-2 is a value expressing an average of 10,000 particles. Equation 2-2 according to the present application can be measured from the above image, and Equation 2-2 can be expressed as convexity of the silicon-based active material.

In an exemplary embodiment of the present application, a range of $X2/Y2 \leq 0.996$, preferably $X2/Y2 \leq 0.995$ may be satisfied, and a range of $0.8 \leq X2/Y2$, preferably $0.9 \leq X2/Y2$, more preferably $0.95 \leq X2/Y2$, specifically $0.98 \leq X2/Y2$ may be satisfied.

The smaller the value of Equation 2-1 or Equation 2-2, the greater the roughness of the silicon-based active material may be meant. As the silicon-based active material with the above range is used, the bonding force with the binder increases, leading to reduction in cracks of the electrode due to the repeating of the charge/discharge cycle.

In an exemplary embodiment of the present application, the silicon-based active material may include silicon-based particles having a particle size distribution of 0.01 um or greater and 30 $\mu$m or less.

The description 'the silicon-based active material includes silicon-based particles having a particle size distribution of 0.01 $\mu$m or greater and 30 $\mu$m or less' means including a plurality of individual silicon-based particles having a particle size within the above range, and the number of silicon-based particles included is not limited.

When the silicon-based particle is spherical, the particle size thereof can be expressed as its diameter. However, even when the silicon-based particle has a shape other than spherical, the particle size can be measured in contrast to the case of the spherical shape, and the particle size of the individual silicon-based particle can be measured by a method that is generally known in the art.

An average particle diameter (D50) of the silicon-based active material of the present invention may be 5 $\mu$m to 10 um, specifically 5.5 $\mu$m to 8 $\mu$m, and more specifically 6 $\mu$m to 7 $\mu$m. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value of the range, a contact area between the silicon particles and the conductive material is excellent due to the composite made of the conductive material and the binder in the negative electrode slurry, so that a sustaining possibility of the conductive network increases, thereby increasing the capacity retention rate. In the meantime, when the average particle diameter satisfies the above range, excessively large silicon particles are excluded, so that a surface of the negative electrode is formed smooth. Accordingly, a current density nonuniformity phenomenon during charging and discharging can be prevented.

In the exemplary embodiment of the present application, the silicon-based active material generally has a characteristic BET specific surface area. The BET specific surface area of the silicon-based active material is preferably 0.01 to 150.0 m$^2$/g, more preferably 0.1 to 100.0 m$^2$/g, particularly preferably 0.2 to 80.0 m$^2$/g, and most preferably 0.2 to 18.0 m$^2$/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the silicon-based active material may be included in an amount of 80 parts by weight or more and 95 parts by weight or less on the basis of 100 parts by weight of the negative electrode composition.

In another exemplary embodiment, the silicon-based active material may be included in an amount of 80 parts by weight or more, preferably 83 parts by weight or more, and more preferably 85 parts by weight or more, and 95 parts by weight or less, preferably 93 parts by weight or less, and more preferably 91 parts by weight or less, on the basis of 100 parts by weight of the negative electrode composition.

The negative electrode composition according to the present application uses the silicon-based active material with a significantly high capacity within the above range. In other words, if used beyond the above range, even if the combination of the linear conductive material and binder of the present invention is used, the life characteristics cannot be controlled, resulting in poor cell performance evaluation. If used below the above range, the life characteristics can be secured, but the capacity characteristics and the energy density are significantly reduced, so when a negative electrode with the same capacity is manufactured, a thickness of the active material layer increases, resulting in poor fast charging performance.

The present application uses the silicon-based active material within the above range to the extent that it can control volume expansion, and at the same time maximize capacity characteristics, and optimizes the contents of a linear conductive material and a binder described below.

The negative electrode composition includes a certain amount of the specific carbon-based material that can control the volume expansion rate during charging and discharging and does not cause a problem in capacity characteristics, thereby exhibiting high-capacity characteristics, and at the same time, improving the life characteristics of the electrode.

In an exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity (circularity) is determined by Equation 1 below, in which A is an area and P is a boundary line.

[Equation 1]

$$4\pi A/P^2$$

In the related art, it is general to use only graphite-based compounds as the negative electrode active material. However, in recent years, as the demand for high-capacity batteries is increasing, attempts to mix and use a silicon-based active material are increasing in order to increase capacity. However, in the case of a silicon-based active material, even when the characteristics of the silicon-based active material itself are partially adjusted as described above, the volume may rapidly expand during the charging/discharging, thereby causing some problems of damaging the conductive path formed in the negative electrode active material layer.

Therefore, in an exemplary embodiment of the present application, a linear conductive material is included as the negative electrode conductive material, and the linear conductive material may include an SWCNT, and an MWCNT.

In general, an existing silicon-based negative electrode may include a point-like conductive material, and a planar conductive material. However, the conductive material according to the present application includes only the linear conductive material, and the linear conductive material includes the SWCNT and the MWCNT.

The point-like conductive material refers to a conductive material that may be used for improving conductivity of the negative electrode, has conductivity without causing a chemical change and has a spherical or point shape. Specifically, the point-like conductive material may be one or more species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

The planar conductive material may include one or more selected from the group consisting of plate-like graphite, graphene, graphene oxide, and graphite flake, and preferably may be plate-like graphite.

First, when carbon black is used as a point-like conductive material in a silicon-based negative electrode, it has the advantage of being inexpensive in terms of the process, but should be included at a high ratio in the negative electrode composition in order to play its role. As such, there is no choice but to use a high ratio of point-like conductive material, so that gas generation at high temperatures becomes a problem and the stability of the negative electrode decreases due to the gas generation.

In addition, the plate-like graphite used as a planar conductive material is appropriate in cost, and has appropriate rigidity, so it acts as a buffer when rolling the silicon-based negative electrode in a soft form. Additionally, the plate-like graphite has a high specific surface area, allowing a conductive network to be formed between active materials. However, the planar conductive material should be included in a certain content or more compared to the silicon-based active material used. Therefore, despite having the above properties, there is a limit to including a high content of the silicon-based active material in the negative electrode active material, and as a result, maximization of the capacity characteristics could not be achieved.

In addition, attempts have been made to solve certain problems by appropriately combining the above point-like conductive materials and planar conductive materials, but the above problems of the point-like conductive materials and planar conductive materials have still not been solved.

However, the negative electrode conductive material according to the present application includes only the linear conductive material, and in particular, the linear conductive material includes the SWCNT and the MWCNT.

In the present application, the SWCNT may have a specific surface area of 900 $m^2$/g to 1500 $m^2$/g, and a mean diameter of 50 nm or greater and 450 nm or less.

In an exemplary embodiment of the present application, the SWCNT may have a mean diameter of 50 nm or greater and 450 nm or less, a length of 5 $\mu$m or greater and 20 $\mu$m or less, and an average aspect ratio of 15 to 100.

The SWCNT is long and has the high specific surface area as described above, so it is the most effective in forming conductive networks among silicon-based active materials. However, SWCNTs have the disadvantage of being very expensive, and if SWCNTs are applied in an excessive amount, the SWCNT dispersant used together is also included, resulting in a decrease in rigidity.

In the present application, the MWCNT has a specific surface area of 100 $m^2$/g to 500 $m^2$/g, and a mean diameter of 10 nm or greater and 20 nm or less.

In the present application, the MWCNT may have a mean diameter of 10 nm or greater and 20 nm or less, a length of 300 nm or greater and 1000 nm or less, and an average aspect ratio of 15 to 100.

The MWCNT has the smaller specific surface area and is inferior in length as described above, as compared with the SWCNT, but is a material that has excellent performance, as compared with the point-like conductive material and planar conductive material described above.

In the present application, the SWCNT has the high specific surface area and the large aspect ratio, and relatively, the MWCNT is used in an aggregated form (bundle form) and is located on the surface of the silicon-based active material, making connection between active materials difficult. In other words, the SWCNT is used for long-distance connection, and the MWCNT is used for mixing with the particle surface and binder composite.

In an exemplary embodiment of the present application, there is provided the negative electrode composition in which a content of the linear conductive material is 0.5 part by weight or more and 10 parts by weight or less on the basis of 100 parts by weight of the silicon-based active material.

In another exemplary embodiment, the linear conductive material may be included in an amount of 0.5 part by weight or more and 10 parts by weight or less, preferably 0.6 part by weight or more and 8 parts by weight or less, and more preferably 0.6 part by weight or more and 7 parts by weight or less on the basis of 100 parts by weight of the silicon-based active material.

In an exemplary embodiment of the present application, as the negative electrode conductive material includes the linear conductive material and satisfies the composition and ratio described above, the negative electrode conductive material has a feature in which output characteristics at high C-rate are excellent because the life characteristics of the existing lithium secondary battery are not greatly affected and points where the battery can be charged and discharged are increased.

In an exemplary embodiment of the present application, the content of the MWCNT may be 0.3 part by weight or more and 6 parts by weight or less and the content of the SWCNT may be 0.1 part by weight or more and 1.5 parts by weight or less on the basis of 100 parts by weight of the silicon-based active material.

In another exemplary embodiment, the content of the MWCNT may be 0.3 part by weight or more and 6 parts by weight or less, preferably 1.0 part by weight or more and 5.5 parts by weight or less, and more preferably 2.0 parts by weight or more and 3.5 parts by weight or less on the basis of 100 parts by weight of the silicon-based active material.

In another exemplary embodiment, the content of the SWCNT may be 0.3 part by weight or more and 1.5 parts by weight or less, and preferably 0.5 part by weight or more and 1.0 part by weight or less on the basis of 100 parts by weight of the silicon-based active material.

That is, the linear conductive material according to the present application does not include the SWCNT alone, but in order to solve the above cost and rigidity problems, also includes the MWCNT, which is a material inferior to the SWCNT in forming a conductive network, within the range of the parts by weight described above. In other words, it was confirmed through research that adjusting the part by weight of the linear conductive material as described above and adjusting the ratio of SWCNT and MWCNT are superior in terms of cost and can also exhibit an effect equivalent to or superior to that of applying SWCNT alone.

Accordingly, by including the linear conductive material, the higher content of the above silicon-based negative electrode active material can be included, as compared with a case of using a point-like or planar conductive material, leading to excellent capacity characteristics. In addition, by using the above combination as the linear conductive material, it is possible to secure a conductive network despite a certain volume expansion. Furthermore, the volume expansion can also be solved by adjusting the negative electrode binder described below.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer when roll-pressed, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and is completely different from the negative electrode conductive material that is applied together with the silicon-based active material as in the present invention, in terms of configuration and role.

In an exemplary embodiment of the present application, there is provided the negative electrode composition in which the negative electrode binder includes one or more selected from the group consisting of a rubber-based binder and an aqueous binder.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-described materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, an aqueous binder may be used, and more specifically, a PAM-based binder may be used.

In an exemplary embodiment of the present application, there is provided the negative electrode for a lithium secondary battery in which the negative electrode binder includes an aqueous binder and the negative electrode binder is included in an amount of 5 parts by weight or more and 15 parts by weight or less, on the basis of 100 parts by weight of the negative electrode composition.

In another exemplary embodiment, the negative electrode binder may be included in an amount of 5 parts by weight or more and 15 parts by weight or less, preferably 7 parts by weight or more and 13 parts by weight or less, and more preferably 9 parts by weight or more and 12 parts by weight or less, on the basis of 100 parts by weight of the negative electrode composition.

In an exemplary embodiment of the present application, the negative electrode binder may be included in an amount of 3 parts by weight or more and 10 parts by weight or less on the basis of 100 parts by weight of the silicon-based active material.

In another exemplary embodiment, the content of the negative electrode binder may be 3 parts by weight or more and 10 parts by weight or less, preferably 3.5 parts by weight or more and 9.5 parts by weight or less, and more preferably 4 parts by weight or more and 9 parts by weight or less on the basis of 100 parts by weight of the silicon-based active material.

In the negative electrode for a lithium secondary battery according to the present application, the silicon-based active material is used within the range of the parts by weight described above in order to maximize capacity characteristics, and the volume expansion during charging and discharging is larger, as compared with a case in which a conventional carbon-based active material is used as a main active material. Accordingly, the negative electrode includes the negative electrode binder in the content described above, and thus, has a feature of efficiently controlling the volume expansion due to charging and discharging of the silicon-based active material having high rigidity.

In an exemplary embodiment of the present application, there is provided a negative electrode for a lithium secondary battery including: a negative electrode current collector layer; and a negative electrode active material layer including the negative electrode composition according to the present application formed on one surface or both surfaces of the negative electrode current collector layer.

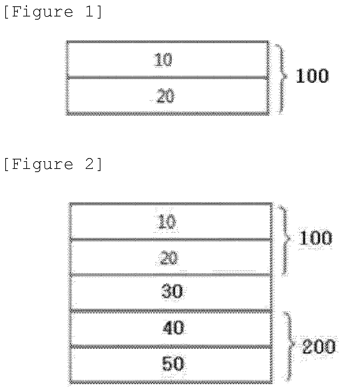

FIG. 1 is a view showing a stack structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface of the negative electrode current collector layer, but the negative electrode active material layer may be formed on both surfaces.

In an exemplary embodiment of the present application, the negative electrode for a lithium secondary battery may be formed by applying and drying a negative electrode slurry including the negative electrode composition to one surface or both surfaces of the negative electrode current collector layer.

In this case, the negative electrode slurry may include the negative electrode composition described above, and a slurry solvent.

In an exemplary embodiment of the present application, a solid content of the negative electrode slurry may satisfy a range of 5% or more and 55% or less.

In another exemplary embodiment, the solid content of the negative electrode slurry may satisfy a range of 5% or more and 55% or less, preferably 7% or more and 35% or less, and more preferably 10% or more and 30% or less.

The solid content of the negative electrode slurry may mean a content of the negative electrode composition included in the negative electrode slurry, and may mean a content of the negative electrode composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode composition is minimized to efficiently form the negative electrode active material layer. In addition, the negative electrode composition according to the present application includes the linear conductive material and the high content of silicon-based active material, and thus, has excellent rapid charging performance and cell performance.

In an exemplary embodiment of the present application, the slurry solvent may be used without limitation as long as it can dissolve the negative electrode composition, and specifically, water, acetone, or NMP may be used.

In an exemplary embodiment of the present application, the negative electrode current collector layer generally has a thickness of 1 um to 100 um. Such negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, there is provided the negative electrode for a lithium secondary battery in which a thickness of the negative electrode current collector layer is 1 um or greater and 100 um or less and a thickness of the negative electrode active material layer is 10 um or greater and 500 um or less.

In the present application, the negative electrode active material layer may refer to a thickness of a single-layer negative electrode active material layer when formed on one surface of the negative electrode current collector layer.

However, the thickness may be variously modified depending on a type and use of the negative electrode used, and is not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material according to the present application and the conductive material are included in the specific compositions and contents, so that the electrode has electrical conductivity and resistance within appropriate ranges.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 is a view showing a stack structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a stack structure with a separator 30 interposed therebetween.

The secondary battery according to the exemplary embodiment of the present specification may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 um, and a surface of the current collector may be formed with microscopic irregularities to enhance adhesion of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.6$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.6$) or $Li_2Mn_3MO_8$ (where M is at least one selected from the group consisting of Fe, Co, Ni, Cu and Zn.); $LiMn_2O_4$ in which a part of Li of the chemical formula is substituted with an alkaline earth metal ion, or the like, but is not limited thereto. The positive electrode may be Li metal.

In the exemplary embodiment of the present application, the positive electrode active material includes a lithium composite transition metal compound including nickel (Ni), cobalt (Co), and manganese (Mn), the lithium composite transition metal compound includes single particles or secondary particles, and an average particle diameter (D50) of the single particles may be 1 um or greater.

For example, the average particle diameter (D50) of the single particles may be 1 um or greater and 12 um or less, 1 um or greater and 8 um or less, 1 um or greater and 6 um or less, greater than 1 um and 12 um or less, greater than 1 um and 8 um or less, or greater than 1 um and 6 um or less.

Even when the single particles are formed with a small average particle diameter (D50) of 1 um or greater and 12 um or less, the particle strength may be excellent. For example, the single particle may have a particle strength of 100 to 300 MPa when roll-pressing with a force of 650 kgf/cm². Accordingly, even when the single particles are roll-pressed with a strong force of 650 kgf/cm², the increase phenomenon of micro-particles in an electrode due to particle breakage is alleviated, thereby improving the lifetime characteristic of the battery.

The single particles may be manufactured by mixing and firing a transition metal precursor and a lithium source material. The secondary particles may be manufactured by a method different from that of the single particles, and the composition thereof may be the same as or different from that of the single particles.

The method of forming the single particles is not particularly limited, but generally can be formed by over-firing with raised firing temperature, or may be manufactured by using additives such as grain growth promoters that help over-firing, or by changing a starting material.

For example, the firing is performed at a temperature at which single particles can be formed. To this end, the firing should be performed at a temperature higher than a temperature during manufacturing of the secondary particles. For example, when the composition of the precursor is the same, the firing should be performed at a temperature higher than a temperature during manufacturing of the secondary particles by about 30°C to 100°C. The firing temperature for forming the single particles may vary depending on the metal composition in the precursor. For example, when forming single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature satisfies the above range, a positive electrode active material including single particles having excellent electrochemical properties can be manufactured. If the firing temperature is below 790°C, a positive electrode active material including a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the single particle is a term used to distinguish the same from typical secondary particles resulting from aggregation of tens to hundreds of primary particles, and is a concept including a single particle consisting of one primary particle and a quasi-single particle form that is an aggregate of 30 or less primary particles.

Specifically, in the present invention, the single particle may be a single particle consisting of one primary particle or a quasi-single particle form that is an aggregate of 30 or less primary particles, and the secondary particle may be an aggregate form of hundreds of primary particles.

In the exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be a single particle consisting of one primary particle or a quasi-single particle form that is an aggregate of 30 or less primary particles, and the secondary particle may be an aggregate form of hundreds of primary particles.

The above-described lithium composite transition metal compound may further include secondary particles. The secondary particle means a form formed by aggregation of primary particles, and can be distinguished from the concept of a single particle including one primary particle, one single particle and a quasi-single particle form, which is an aggregate of 30 or less primary particles.

The secondary particle may have a particle diameter (D50) of 1 $\mu$m to 20 $\mu$m, 2 $\mu$m to 17 $\mu$m, and preferably 3 um to 15 $\mu$m. The specific surface area (BET) of the secondary particles may be 0.05 m$^2$/g to 10 m$^2$/g, preferably 0.1 m$^2$/g to 1 m$^2$/ g, and more preferably 0.3 m$^2$/g to 0.8 m$^2$/g.

In a further exemplary embodiment of the present application, the secondary particle is an aggregate of primary particles, and the average particle diameter (D50) of the primary particles is 0.5 $\mu$m to 3 $\mu$m. Specifically, the secondary particle may be an aggregate form of hundreds of primary particles, and the average particle diameter (D50) of the primary particles may be 0.6 $\mu$m to 2.8 $\mu$m, 0.8 $\mu$m to 2.5 $\mu$m, or 0.8 $\mu$m to 1.5 $\mu$m.

When the average particle diameter (D50) of the primary particles satisfies the above range, a single-particle positive electrode active material having excellent electrochemical properties can be formed. If the average particle diameter (D50) of the primary particles is too small, the number of aggregates of primary particles forming lithium nickel-based oxide particles increases, reducing the effect of suppressing particle breakage during roll-pressing, and if the average particle diameter (D50) of the primary particles is too large, a lithium diffusion path inside the primary particles may be lengthened, increasing a resistance and degrading an output characteristic.

According to a further exemplary embodiment of the present application, the average particle diameter (D50) of the single particles is smaller than the average particle diameter (D50) of the secondary particles. As a result, the single particles may have excellent particle strength even if they are formed with a small particle diameter, and accordingly, the increase phenomenon of micro-particles in an electrode due to particle breakage is alleviated, thereby improving the lifetime characteristic of the battery.

In the exemplary embodiment of the present application, the average particle diameter (D50) of the single particles is smaller than the average particle diameter (D50) of the secondary particles by 1 $\mu$m to 18 $\mu$m.

For example, the average particle diameter (D50) of the single particles may be 1 $\mu$m to 16 um smaller, 1.5 $\mu$m to 15 $\mu$m smaller, or 2 $\mu$m to 14 $\mu$m smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even if they are formed with a small particle diameter, and as a result, the increase phenomenon of micro-particles in an electrode due to particle breakage is alleviated, thereby improving the lifetime characteristic of the battery and the energy density.

According to a further exemplary embodiment of the present application, the single particles are included in an amount of 15 parts by weight to 100 parts by weight on the basis of 100 parts by weight of the positive electrode active material. The single particles may be included in an amount of 20 parts by weight to 100 parts by weight, or 30 parts by weight to 100 parts by weight on the basis of 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more on the basis of 100 parts by weight of the positive electrode active material. The single particles may be included in an amount of 100 parts by weight or less on the basis of 100 parts by weight of the positive electrode active material.

When the single particles are included within the above range, excellent battery characteristics may be exhibited in combination with the negative electrode material described above. In particular, when the single particles are included in an amount of 15 parts by weight or more, the increase phenomenon of micro-particles in an electrode due to particle breakage in a roll-pressing process after fabrication of an electrode can be alleviated, thereby improving the lifetime characteristics of the battery.

In the exemplary embodiment of the present application, the lithium composite transition metal compound may further include secondary particles, and the secondary particles may be included in an amount of 85 parts by weight or less on the basis of 100 parts by weight of the positive electrode active material. The secondary particles may be included in an amount of 80 parts by weight or less, 75 parts by weight or less, or 70 parts by weight or less on the basis of 100 parts by weight of the positive electrode active material. The secondary particles may be included in an amount of 0 part by weight or more on the basis of 100 parts by weight of the positive electrode active material.

When the above range is satisfied, the above-described effects due to the existence of the single particles in the positive electrode active material can be maximized. In the case in which the positive electrode active material of the secondary particles is included, the components thereof may be the same as or different from those exemplified in the single-particle positive electrode active material described above, and may mean an aggregate form of single particles.

In the exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, most preferably 98 parts by weight or more and 99.9 parts by weight or less.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve bonding between particles of the positive electrode active material and adhesion between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving life characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Preparation Example>**

**<Preparation of Negative Electrode>**

A negative electrode slurry (solid concentration: 28 wt%) was prepared by adding Si (average particle diameter (D50): 3.5 μm) serving as a silicon-based active material, SWCNTs, MWCNTs, and polyacrylamide (PAM) serving as a binder to distilled water serving as a solvent for formation of a negative electrode slurry at a weight ratio of Table 1 below 1.

The SWCNTs satisfied a BET specific surface area of 1000 to 1500 $m^2$/g, an aspect ratio of 10000 or greater and an average diameter of 1.0 um or greater. In addition, the MWCNTs satisfied a specific surface area of 100 to 500 $m^2$/g, an average diameter of 10 to 20 um, and the number of walls of around 5 to 20.

As a specific mixing method, after dispersing the SWCNTs, the MWCNTs, the binder and water at 2500 rpm for 30 minutes with a homo mixer, the silicon-based active material was added to the dispersion, which was then dispersed at 2500 rpm for 30 minutes to fabricate a negative electrode slurry.

The negative electrode slurry was coated on both surfaces of a copper current collector (thickness: 26 um) serving as a negative electrode current collector layer with a loading amount of 87.7 mg/25 $cm^2$, which was then roll-pressed and dried in a vacuum oven at 130°C for 10 hours to form a negative electrode active material layer (thickness: 33 pm), whereby a negative electrode was prepared (thickness of negative electrode: 41 um, porosity of negative electrode: 40.0%).

Negative electrodes were prepared in the same manner as in Example 1, except that, in Example 1, the parts by weight in Table 1 below were used.

[Table 1]

| | Silicon-based active material (part by weight) | SWCNT (part by weight) | MWCNT (part by weight) | Negative electrode binder (part by weight) |
|---|---|---|---|---|
| Example 1 | 90.901 | 0.636 | 2.091 | 6.373 |
| Example 2 | 89.21 | 0.669 | 2.542 | 7.58 |
| Example 3 | 93.15 | 0.559 | 2.562 | 3.726 |
| Example 4 | 89.16 | 0.669 | 2.140 | 8.029 |
| Comparative Example 1 | 94.16 | 0.659 | 2.354 | 2.825 |

(continued)

| | Silicon-based active material (part by weight) | SWCNT (part by weight) | MWCNT (part by weight) | Negative electrode binder (part by weight) |
|---|---|---|---|---|
| Comparative Example 2 | 88.38 | 0.619 | 2.209 | 8.794 |
| Comparative Example 3 | 91.32 | 0 | 2.283 | 6.393 |
| Comparative Example 4 | 92.89 | 0.650 | 0 | 6.456 |
| Comparative Example 5 | (Si:C=10:90) 90.5 | 0.5 | 3 | CMC:SBR= 3:3 |
| Comparative Example 6 | (Si:C=10:90) 94.25 | 0.25 | 1.5 | CMC:SBR= 2:2 |

In Table 1, part by weight is part by weight based on 100 parts by weight of the total negative electrode composition, and in Table 2 below, part by weight is part by weight based on 100 parts by weight of the negative electrode active material.

[Table 2]

| | Silicon-based active material (part by weight) | SWCNT (part by weight) | MWCNT (part by weight) | Negative electrode binder (part by weight) |
|---|---|---|---|---|
| Example 1 | 100 | 0.7 | 2.3 | 7.0 |
| Example 2 | 100 | 0.75 | 2.85 | 8.5 |
| Example 3 | 100 | 0.6 | 2.75 | 4 |
| Example 4 | 100 | 0.75 | 2.4 | 9 |
| Comparative Example 1 | 100 | 0.7 | 2.5 | 3 |
| Comparative Example 2 | 100 | 0.7 | 2.5 | 10 |
| Comparative Example 3 | 100 | 0 | 2.5 | 7 |
| Comparative Example 4 | 100 | 0.7 | 0 | 7 |
| Comparative Example 5 | 100 | 5.5 | 3.31 | 6.63 |
| Comparative Example 6 | 100 | 2.8 | 1.66 | 4.42 |

**<Comparative Example 7>**

A negative electrode active material layer composition was prepared using Si (average particle diameter (D50): 3.5 um) as a silicon-based active material, a first conductive material, a third conductive material, and polyacrylamide (PAM) as a binder at a weight ratio of 80:10:0.3:9.7. A first negative electrode slurry (solid concentration: 45 wt%) was prepared by adding the composition to distilled water as a solvent for forming a negative electrode slurry.
The first conductive material was carbon black C (specific surface area: 58 $m^2/g$, diameter: 37 nm), and the third conductive material was carbon nanotubes.

As a mixing method, after dispersing the first conductive material, the third conductive material, the binder and water at 2500 rpm for 30 minutes by using a homo mixer, the active material was added to the dispersion, which was then dispersed at 2500 rpm for 30 minutes to fabricate a slurry.

The negative electrode slurry was coated on both surfaces of a copper current collector (thickness: 30 um) serving as a negative electrode current collector with a loading amount of 99.65 mg/25 $cm^2$, which was then roll-pressed and dried in a vacuum oven at 130°C for 10 hours to form a negative electrode active material layer (thickness: 37 um), whereby a negative electrode was prepared (thickness of negative electrode: 41 um, porosity of negative electrode: 40.0%).

**<Comparative Example 8>**

A negative electrode was prepared in the same manner as in Comparative Example 7, except that, in Comparative Example 7, a second conductive material was used instead of the first conductive material. The second conductive material was plate-like graphite (specific surface area: 17 $m^2/g$, average particle diameter (D50): 3.5 $\mu m$).

**<Comparative Example 9>**

A negative electrode active material layer composition was prepared using SiO (average particle diameter (D50): 3.5 um) as a silicon-based active material, artificial graphite, a first conductive material, a third conductive material, and CMC:SBR as a binder at a weight ratio of 4.779:90.794:0.982:0.018:1.127:2.3. A negative electrode slurry (solid concentration: 45 wt%) was prepared by adding the composition to distilled water as a solvent for forming a negative electrode slurry.

The first conductive material was carbon black C (specific surface area: 58 $m^2/g$, diameter: 37 nm), and the third conductive material was carbon nanotubes.

As a mixing method, after dispersing the first conductive material, the third conductive material, the binder and water at 2500 rpm for 30 minutes by using a homo mixer, the active material was added to the dispersion, which was then dispersed at 2500 rpm for 30 minutes to fabricate a slurry.

The negative electrode slurry was coated on both surfaces of a copper current collector (thickness: 8 um) serving as a negative electrode current collector with a loading amount of 9.312 $mg/cm^2$, which was then roll-pressed and dried in a vacuum oven at 130°C for 10 hours to form a negative electrode active material layer (thickness: 114 $\mu m$).

**<Preparation of Secondary Battery>**

A positive electrode slurry (solid concentration: 78 wt%) was prepared by adding $LiNi_{0.6}Co_{0.2}Mn_{0.2}O_2$ (average particle diameter (D50): 15 um) as a positive electrode active material, carbon black (product name: Super C65, manufacturer: Timcal) as a conductive material, and polyvinylidene fluoride (PVdF) as a binder to N-methyl-2-pyrrolidone (NMP) as a solvent for formation of a positive electrode slurry at a weight ratio of 97:1.5:1.5.

The positive electrode slurry was coated on both surfaces of an aluminum current collector (thickness: 12 um) serving as a positive electrode current collector with a loading amount of 537 $mg/25 cm^2$, which was then roll-pressed and dried in a vacuum oven at 130°C for 10 hours to form a positive electrode active material layer (thickness: 65 um), whereby a positive electrode was prepared (thickness of the positive electrode: 77 um, porosity: 26%).

A secondary battery of Example 1 was prepared by interposing a polyethylene separator between the positive electrode and the negative electrode of Example 1 and injecting an electrolyte.

The electrolyte was obtained by adding vinylene carbonate to an organic solvent, in which fluoroethylene carbonate (FEC) and diethyl carbonate (DEC) were mixed at a volume ratio of 30:70, in an amount of 3 wt% on the basis of a total weight of the electrolyte and adding $LiPF_6$ as a lithium salt to a concentration of 1M.

Secondary batteries were each prepared in the same manner as in the above method, except that the negative electrodes of the Examples and Comparative Examples were used.

**Experimental Example 1: Evaluation on monocell life**

For the secondary batteries prepared above, the life and the capacity retention rate were evaluated using an electrochemical charging and discharging device. The secondary batteries were subjected to 300 cycles under conditions of charging (1.0C CC/CV charging, 4.2 V, 0.05C Cut) and discharging (0.5C CC discharging, 3.3V Cut) at room temperature (25°C) and then the capacity retention rates thereof were confirmed.

The 300th capacity retention rate was evaluated using the formula below, and the results are shown in Table 3 below.

capacity retention rate (%) = {(discharge capacity at 300th cycle)/(discharge capacity at first cycle)}

[Table 3]

|  | Cycle Retention (% at 300 cycles) |
|---|---|
| Example 1 | 86.8 |
| Example 2 | 86.0 |
| Example 3 | 85.0 |
| Example 4 | 86.4 |

(continued)

|  | Cycle Retention (% at 300 cycles) |
|---|---|
| Comparative Example 1 | 82.5 |
| Comparative Example 2 | 83.1 |
| Comparative Example 3 | 72.4 |
| Comparative Example 4 | 81.0 |
| Comparative Example 5 | 65.4 |
| Comparative Example 6 | 61.2 |
| Comparative Example 7 | 78.4 |
| Comparative Example 8 | 82.3 |
| Comparative Example 9 | 55.1 |

## Experimental Example 2: Cycle Resistance Increase

## Rate

In the test in Experimental Example 1, the capacity retention rate was measured by charging/discharging (4.2-3.0V) at 0.33C/0.33C every 100 cycles, and then the resistance increase rate was compared and analyzed by discharging the battery with a pulse of 2.5C at SOC50 to measure the resistance.

For the evaluation of the resistance increase rate measurement, data at 200 cycles was each calculated, and the results are shown in Table 4 below.

[Table 4]

|  | Resistance increase rate (%) after 200 cycles (3.0 to 4.2 V range 1C/0.5C) |
|---|---|
| Example 1 | 10.2 |
| Example 2 | 11.4 |
| Example 3 | 10.7 |
| Example 4 | 9.8 |
| Comparative Example 1 | 12.1 |
| Comparative Example 2 | 13.6 |
| Comparative Example 3 | 15.9 |
| Comparative Example 4 | 13.4 |
| Comparative Example 5 | 22.1 |
| Comparative Example 6 | 27.5 |
| Comparative Example 7 | 16.8 |
| Comparative Example 8 | 21.4 |
| Comparative Example 9 | 35.7 |

As can be seen in Table 3, it could be confirmed that Examples 1 to 4 of the present invention exhibited superior performance, as compared with the Comparative Examples.

Specifically, in Comparative Example 1, the conductive network could be properly formed, but as the ratio of the binder was very low, the connection between the networks was broken, resulting in a decrease in performance.

In Comparative Example 2, unlike Comparative Example 1, the degree of disconnection of the connection structure between networks may be seen to have decreased as the ratio of the binder became too high. However, as the ratio of the binder, which is a non-conductive material, increased, the resistance increased, resulting in a decrease in performance.

In Comparative Examples 3 and 4, SWCNT or MWCNT was used alone as the conductive material, and as compared with Example 1, only each conductive material was excluded and there was no increase in the amount of the conductive material itself, resulting in weakened conductivity and poor performance.

In Comparative Examples 5 and 6, the active material in which Si and C were combined was used, and in all the Examples of the present application, one or more selected from the group consisting of SiOx (x=0) and SiOx (0<x<2) was included, and the SiOx (x=0) was included in an amount of 90 parts by weight or more on the basis of 100 parts by weight of the silicon-based active material, i.e., pure Si was used. In Comparative Examples 5 and 6, the capacity could not be maximized, as compared with the Examples of the present application, a composite of graphite whose charging performance is very poor compared to Si was used, and it is believed that problems such as Li-plating occurred because the evaluation charging C-rate of 1.0C was a very difficult condition to apply to the corresponding electrode. In addition, when CMC:SBR was used as a binder, it was difficult to improve performance in silicon-based batteries, resulting in a sharp reduction in performance.

Comparative Examples 7 and 8 correspond to the cases where carbon black, which is a point-like conductive material, and plate-like graphite, which is a planar conductive material, were applied. First, in the case of carbon black, the added composition content thereof was high, which greatly increased the viscosity of the slurry, affecting the dispersion of carbon black and SWCNTs to show the results described above. In addition, when plate-like graphite was used, there was no problem with the degree of dispersion because it was not a material that had a significant effect on dispersion. However, as the content of the conductive material increased and thus the composition ratio of the silicon-based active material decreased, the electrode weight loading amount increased in order to achieve the same capacity. As a result, the electrode became thicker, resulting in lower performance. For reference, the performance of Comparative Example 7 was even inferior to that of Comparative Example 8 resulting from the deterioration in conductivity and dispersibility due to the conductive material, and the increase in electrode thickness.

In Comparative Example 9, it was confirmed that the performance was very poor as a result of the mixed electrode of SiO and graphite. This is a result of applying graphite, which has very poor charging performance compared to Si, as the main active material. It is believed that problems such as Li-plating occurred because the evaluation charging C-rate of 1.0C is a very difficult condition to apply to graphite electrodes, resulting in a sharp reduction in performance.

## Claims

1. A negative electrode composition comprising:

   a silicon-based active material;
   a linear conductive material; and
   a negative electrode binder,
   wherein the silicon-based active material comprises one or more selected from the group consisting of SiOx (x=0) and SiOx (0<x<2), and includes 90 parts by weight or more of SiOx (x=0) on the basis of 100 parts by weight of the silicon-based active material,
   wherein the linear conductive material comprises an SWCNT and an MWCNT,
   wherein the silicon-based active material is included in an amount of 80 parts by weight or more and 95 parts by weight or less on the basis of 100 parts by weight of the negative electrode composition, and
   wherein the negative electrode binder is included in an amount of 3 parts by weight or more and 10 parts by weight or less on the basis of 100 parts by weight of the silicon-based active material.

2. The negative electrode composition of claim 1,
   wherein the silicon-based active material has a crystal grain size of 200 nm or less.

3. The negative electrode composition of claim 1,
   wherein a content of the linear conductive material is 0.5 part by weight or more and 10 parts by weight or less on the basis of 100 parts by weight of the silicon-based active material.

4. The negative electrode composition of claim 1,

   wherein a content of the MWCNT is 0.3 part by weight or more and 6 parts by weight or less and a content of the SWCNT is 0.1 part by weight or more and 1.5 parts by weight or less on the basis of 100 parts by weight of the silicon-based active material.

5. The negative electrode composition of claim 1,

wherein the MWCNT has a specific surface area of 100 $m^2/g$ to 500$m^2/g$, and a mean diameter of 10 nm or greater and 20 nm or less.

6. The negative electrode composition of claim 1,
wherein the SWCNT has a specific surface area of 900 $m^2/g$ to 1500$m^2/g$, and a mean diameter of 50 nm or greater and 450 nm or less.

7. The negative electrode composition of claim 1,
wherein the negative electrode binder comprises one or more selected from the group consisting of a rubber-based binder and an aqueous binder.

8. A negative electrode for a lithium secondary battery comprising:

   a negative electrode current collector layer; and
   a negative electrode active material layer comprising the negative electrode composition of any one of claims 1 to 7 formed on one surface or both surfaces of the negative electrode current collector layer.

9. The negative electrode for a lithium secondary battery of claim 8, wherein a thickness of the negative electrode current collector layer is 1 um or greater and 100 um or less, and
wherein a thickness of the negative electrode active material layer is 10 um or greater and 500 um or less.

10. A lithium secondary battery comprising:

   a positive electrode;
   the negative electrode for a lithium secondary battery of claim 8;
   a separator provided between the positive electrode and the negative electrode; and an electrolyte.

[Figure 1]

[Figure 2]

## INTERNATIONAL SEARCH REPORT

| International application No. |
| --- |
| **PCT/KR2023/013299** |

### A. CLASSIFICATION OF SUBJECT MATTER

**H01M 4/62**(2006.01)i; **H01M 4/38**(2006.01)i; **H01M 4/48**(2010.01)i; **H01M 4/1395**(2010.01)i; **H01M 4/134**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/62(2006.01); H01M 10/052(2010.01); H01M 10/42(2006.01); H01M 10/54(2006.01); H01M 4/131(2010.01); H01M 4/36(2006.01); H01M 4/38(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 실리콘(silicon), 도전재(conductive material), 바인더(binder), 단일벽 탄소나노튜브(SWCNT), 다중벽 탄소나노튜브(MWCNT)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2020-0107872 A (LG CHEM, LTD.) 16 September 2020 (2020-09-16)<br>See claims 1 and 21-22; and paragraphs [0026], [0081]-[0082], [0091]-[0092], [0099]-[0100], [0105], [0200]-[0201] and [0250]. | 1-10 |
| Y | JP 2021-535580 A (BTR (TIANJIN) NANO MATERIAL MANUFACTURE CO., LTD.) 16 December 2021 (2021-12-16)<br>See claims 1 and 5. | 1-10 |
| A | WO 2022-080910 A1 (LG ENERGY SOLUTION LTD.) 21 April 2022 (2022-04-21)<br>See entire document. | 1-10 |
| A | KR 10-2010-0062297 A (SAMSUNG ELECTRONICS CO., LTD.) 10 June 2010 (2010-06-10)<br>See entire document. | 1-10 |
| A | CN 109273689 A (HUIZHOU EVE ENERGY CO., LTD.) 25 January 2019 (2019-01-25)<br>See entire document. | 1-10 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 December 2023** | **20 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/013299**

| Patent document cited in search report | | | Publication date (day/month/year) | Patent family member(s) | | | Publication date (day/month/year) |
|---|---|---|---|---|---|---|---|
| KR | 10-2020-0107872 | A | 16 September 2020 | EP | 3916846 | A1 | 01 December 2021 |
| | | | | EP | 3916846 | A4 | 23 March 2022 |
| | | | | US | 2022-0158192 | A1 | 19 May 2022 |
| | | | | WO | 2020-184938 | A1 | 17 September 2020 |
| JP | 2021-535580 | A | 16 December 2021 | CN | 111799522 | A | 20 October 2020 |
| | | | | CN | 111799522 | B | 10 January 2023 |
| | | | | EP | 3832782 | A1 | 09 June 2021 |
| | | | | EP | 3832782 | A4 | 17 November 2021 |
| | | | | JP | 7220360 | B2 | 10 February 2023 |
| | | | | KR | 10-2021-0059763 | A | 25 May 2021 |
| | | | | US | 2022-0115718 | A1 | 14 April 2022 |
| | | | | WO | 2020-206884 | A1 | 15 October 2020 |
| WO | 2022-080910 | A1 | 21 April 2022 | CN | 116250095 | A | 09 June 2023 |
| | | | | JP | 2023-542195 | A | 05 October 2023 |
| | | | | US | 2023-0361278 | A1 | 09 November 2023 |
| KR | 10-2010-0062297 | A | 10 June 2010 | KR | 10-1558535 | B1 | 07 October 2015 |
| | | | | US | 2010-0136431 | A1 | 03 June 2010 |
| | | | | US | 8697286 | B2 | 15 April 2014 |
| CN | 109273689 | A | 25 January 2019 | CN | 109273689 | B | 24 September 2021 |

Form PCT/ISA/210 (patent family annex) (July 2022)

**EP 4 462 516 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220113646
- JP 2009080971 A